# EUROPEAN PATENT APPLICATION

(11) **EP 4 691 883 A1**
(43) Date of publication of application: **11.02.2026**
(21) Application number: 24779655.0
(22) Date of filing: 18.03.2024
(51) Int. Cl.: B62D 6/00, A01B 69/00, B62D 7/14

(54) **WORK VEHICLE**

(30) Priority: 24.03.2023 JP 2023048501
(71) Applicant: Kubota Corporation, Osaka 556-8601 (JP)
(72) Inventor: KATO, Ken, Sakai-shi, Osaka 590-0908 (JP); SHINTANI, Koichi, Sakai-shi, Osaka 590-0908 (JP); NISHINO, Kunihiko, Sakai-shi, Osaka 590-0908 (JP); USHIRO, Kenzo, Sakai-shi, Osaka 590-0908 (JP)
(74) Representative: Cabinet Beau de Loménie
(86) International application number: PCT/JP2024/010525
(87) International publication number: WO 2024/203530

(57) **Abstract**

A work vehicle includes: a body; a front travel device configured to be steerable; a rear travel device configured to be steerable; a steering control device configured to perform steering control on each of the front travel device and the rear travel device and having a plurality of steering modes in each of which the steering control is performed in a different manner; a detection unit configured to detect the orientation of the front travel device and the orientation of the rear travel device; and a notification unit. The plurality of steering modes include a steering mode in which one of the front travel device and the rear travel device is set to a steerable state and the other of the front travel device and the rear travel device is set to a non-steerable state. The notification unit issues a notification based on a detection result from the detection unit, in response to the occurrence of a neutral deviation state in which the orientation of the travel device that is set to the non-steerable state deviates from a neutral orientation by an amount greater than or equal to a predetermined threshold value.

## Description

### Technical Field

The present invention relates to a work vehicle.

### Background Art

For example, in the work vehicle disclosed in Patent Document 1 (referred to as a "work vehicle" in the document), both the front travel device (referred to as "front wheels" in the document) and the rear travel device (referred to as "rear wheels" in the document) are configured to be steerable. A steering control device (referred to as a "control unit" in the document) capable of performing steering control on each of the front travel device and the rear travel device is provided, and the steering control device has a plurality of steering modes in each of which steering control is performed in a different manner.

### Prior Art Documents

### Patent Documents

Patent Document: JP 2013-248919A

### Disclosure of the Invention

### Problem to be Solved by the Invention

When the steering control device performs steering control on one of the front travel device and the rear travel device, the orientation of the other of the front travel device and the rear travel device is set to a neutral orientation in the left-right direction. However, if an external force is applied to the travel device set to the neutral orientation, or if hydraulic oil leaks from the hydraulic circuit, the travel device set to the neutral orientation may deviate to the left or right from the neutral orientation (a neutral deviation state may occur). In such a case, it is undesirable for the operator or the like to continue work without noticing the occurrence of the neutral deviation state.

An object of the present invention is to provide a work vehicle in which the operator or the like can easily recognize that a neutral deviation state has occurred in the travel device that should be in the neutral orientation.

### Means for Solving Problem

A work device according to the present invention includes: a body; a front travel device supported by a front portion of the body and configured to be steerable; a rear travel device supported by a rear portion of the body and configured to be steerable; a steering control device configured to perform steering control on each of the front travel device and the rear travel device and having a plurality of steering modes in each of which the steering control is performed in a different manner; a detection unit configured to detect an orientation of the front travel device and an orientation of the rear travel device; and a notification unit, wherein the plurality of steering modes include a steering mode in which one of the front travel device and the rear travel device is set to a steerable state and the other of the front travel device and the rear travel device is set to a non-steerable state, and the notification unit issues a notification based on a detection result from the detection unit, in response to an occurrence of a neutral deviation state in which the orientation of the travel device that is set to the non-steerable state between the front and rear travel devices deviates from a neutral orientation by an amount greater than or equal to a predetermined threshold value.

According to the present invention, the detection unit detects the orientation of the front travel device and the orientation of the rear travel device. The notification unit issues a notification indicating that the neutral deviation state has occurred in the travel device that should be in the neutral orientation, based on a detection result from the detection unit. This prevents the operator or the like from continuing work without noticing the occurrence of the neutral deviation state. As a result, a work vehicle is realized in which the operator or the like can easily recognize that the neutral deviation state has occurred in the travel device that should be in the neutral orientation.

In the present invention, it is preferable that the notification unit is configured to issue the notification after a predetermined time has elapsed since the occurrence of the neutral deviation state.

With this configuration, it is possible to prevent notifications from being issued during work, thereby preventing a reduction in efficiency caused by interruption of work.

In the present invention, it is preferable that the notification unit is configured to issue the notification when the neutral deviation state occurs and the body is in a stopped state.

With this configuration, no notification is issued during the travel of the body, and therefore the operator or the like can recognize the neutral deviation state after completing the travel of the body without interrupting the travel. This makes it possible to prevent a reduction in efficiency caused by interruption of travel.

In the present invention, it is preferable that the body is equipped with a work device configured to perform work on an agricultural field, and the notification unit is configured to issue the notification when the neutral deviation state occurs and the work device is in a non-working state in which the work device is not performing work.

With this configuration, no notification is issued during work, and therefore the operator or the like can recognize the neutral deviation state after completing the work with the work device without stopping the work device during work. This makes it possible to prevent a reduction in efficiency caused by interruption of work.

In the present invention, it is preferable that the notification unit is configured to change a manner in which the notification is issued according to the degree of deviation from the neutral position of the travel device that is set to the non-steerable state.

With this configuration, the notification is issued according to the degree of deviation from the neutral orientation, and therefore the operator can easily recognize the degree of deviation.

In the present invention, it is preferable that the plurality of steering modes include an orientation correction mode for changing the orientation of the travel device that is set to the non-steerable state to the neutral orientation, and the work vehicle includes a switching operation tool configured to receive an operation performed to switch the steering mode of the steering control device to the orientation correction mode.

With this configuration, when the operator or the like operates the switching operation tool, the steering mode is switched to the orientation correction mode. This makes it possible to perform an operation for returning the orientation of the travel device, which is set to the non-steerable state, to the neutral orientation.

In the present invention, it is preferable that the notification unit includes a display light mounted on the switching operation tool, and the display light is configured to issue the notification by blinking.

With this configuration, when the neutral deviation state occurs in the travel device set to the non-steerable state, the display light of the switching operation tool blinks. This makes it easier for the operator or the like to notice the neutral deviation state.

In the present invention, it is preferable that the steering control device is configured to switch the steering mode to the orientation correction mode even when the orientation of the travel device that is set to the steerable state is not the neutral orientation.

With this configuration, it is possible to perform an operation to return the orientation of the travel device set to the non-steerable state to the neutral orientation, regardless of the orientation of the travel device set to the steerable state. This makes it easier to perform the operation to return the orientation of the travel device set to the non-steerable state to the neutral orientation.

In the present invention, it is preferable that, in the orientation correction mode, the steering control device sets the travel device that has been set to the non-steerable state to the steerable state, and sets the travel device that has been set to the steerable state to the non-steerable state.

With this configuration, it is possible to perform an operation to return the orientation of the travel device set to the non-steerable state to the neutral orientation.

In the present invention, it is preferable that the steering control device returns from the orientation correction mode to the original steering mode upon completion of changing the orientation of the travel device to the neutral orientation in the orientation correction mode.

With this configuration, when the orientation of the travel device set to the non-steerable state returns to the neutral orientation, the steering control device immediately returns to the original steering mode. Therefore, the operator or the like can continue the original work without performing an operation to change the steering mode.

In the present invention, it is preferable that conditions for the steering control device to switch the steering mode to the orientation correction mode include that the body is in a stopped state.

When the operator or the like performs an operation to return the orientation of the travel device set to the non-steerable state to the neutral orientation, there is a possibility that the body may deviate from the intended direction if the body is traveling. With this configuration, the operator or the like can return the orientation of the travel device set to the non-steerable state to the neutral orientation without causing the body to deviate in orientation.

In the present invention, it is preferable that the plurality of steering modes include a front wheel steering mode in which the front travel device is set to the steerable state and the rear travel device is set to the non-steerable state, the switching operation tool is configured to receive an operation performed to switch the steering mode of the steering control device to the front wheel steering mode, and in the front wheel steering mode, the steering control device switches the steering mode to the orientation correction mode when the orientation of the rear travel device deviates from the neutral orientation by an amount greater than or equal to the predetermined threshold value and the switching operation tool is operated.

With this configuration, it is possible to perform an operation to return the orientation of the rear travel device to the neutral orientation.

In the present invention, it is preferable that the steering control device returns to the front wheel steering mode upon completion of changing the orientation of the rear travel device to the neutral orientation in the orientation correction mode.

With this configuration, when the orientation of the rear travel device set to the non-steerable state returns to the neutral orientation, the steering control device immediately returns to the original front wheel steering mode. Therefore, the operator or the like can continue the original work without performing an operation to change the steering mode to the front wheel steering mode.

In the present invention, it is preferable that the plurality of steering modes include a rear wheel steering mode in which the rear travel device is set to the steerable state and the front travel device is set to the non-steerable state, the switching operation tool is configured to receive an operation performed to switch the steering mode of the steering control device to the rear wheel steering mode, and in the rear wheel steering mode, the steering control device switches the steering mode to the orientation correction mode when the orientation of the front travel device deviates from the neutral orientation by an amount greater than or equal to the predetermined threshold value and the switching operation tool is operated.

With this configuration, it is possible to perform an operation to return the orientation of the front travel device to the neutral orientation.

In the present invention, it is preferable that the steering control device returns to the rear wheel steering mode upon completion of changing the orientation of the front travel device to the neutral orientation in the orientation correction mode.

With this configuration, when the orientation of the front travel device set to the non-steerable state returns to the neutral orientation, the steering control device immediately returns to the original rear wheel steering mode. Therefore, the operator or the like can continue the original work without performing an operation to change the steering mode to the rear wheel steering mode.

In the present invention, it is preferable that the work vehicle further includes: a steering operation tool configured to receive a steering operation performed to steer the travel devices, and the notification unit is configured to, when the neutral deviation state occurs, indicate a direction to which the steering operation tool is to be operated in order to change the orientation of the travel device deviating from the neutral orientation to the neutral orientation.

With this configuration, when the operator or the like performs an operation to return the orientation of the travel device set to the non-steerable state to the neutral orientation, the operator or the like can understand the direction to which the steering operation tool is to be operated, making the operation easier.

### Brief Description of the Drawings

FIG. 1 is a left side view showing the overall structure of a ride-on work machine.
FIG. 2 is a front view showing the overall structure of the ride-on work machine.
FIG. 3 is a rear view showing the overall structure of the ride-on work machine.
FIG. 4 is a hydraulic circuit diagram of a steering system.
FIG. 5 is a block diagram showing a control system.
FIG. 6 is a diagram showing the correspondence relationships between body states and steering modes.
FIG. 7 is a flowchart showing the process of changing the correspondence relationship.
FIG. 8 is a flowchart showing processing performed in an orientation correction mode.
FIG. 9 is a flowchart showing processing performed in the orientation correction mode.

### Best Mode for Carrying out the Invention

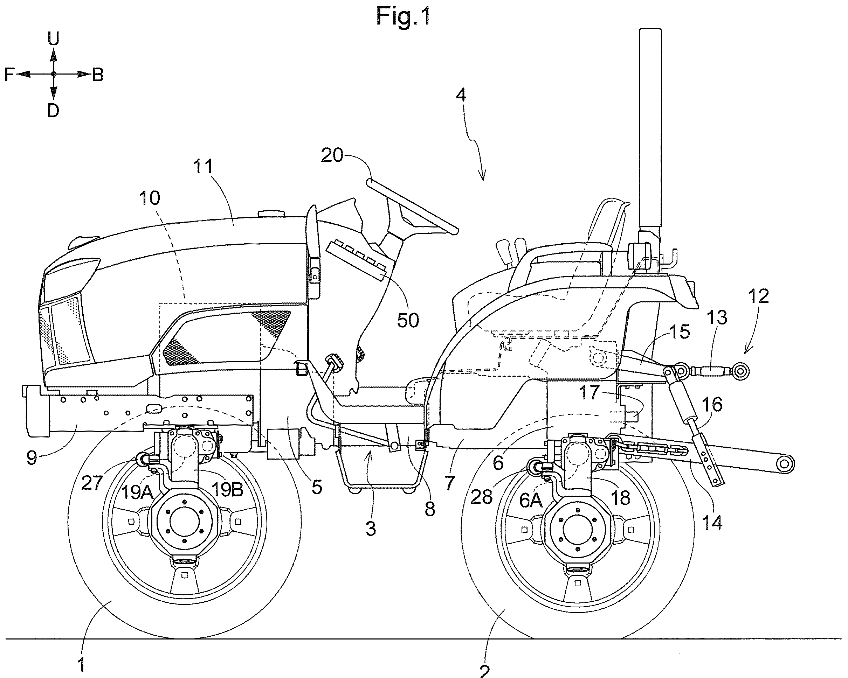

In FIGS. 1 to 3, the arrow indicated by "F" indicates the forward direction, the arrow indicated by "B" indicates the backward direction, the arrow indicated by "U" indicates the upward direction, the arrow indicated by "D" indicates the downward direction, the arrow indicated by "R" indicates the rightward direction, and the arrow indicated by "L" indicates the leftward direction.

### Overall Configuration of Tractor

As shown in FIGS. 1 to 3, a body 3 is supported by left and right front wheels 1 and left and right rear wheels 2. A driving section 4 is provided in the body 3. A steering wheel 20 is provided in the driving section 4. The front wheels 1 are equivalent to the "front travel device" recited in the claims. The rear wheels 2 are equivalent to the "rear travel device" recited in the claims. The steering wheel 20 is equivalent to the "steering operation tool" recited in the claims.

As shown in FIGS. 1 to 3, the body 3 includes a front transmission case 5, a rear transmission case 6, a hydrostatic continuously variable transmission 7, a body frame 8, body frames 9, and an engine 10. The continuously variable transmission 7 is connected to a front portion of the rear transmission case 6, and the channel-shaped body frame 8 is connected across the front transmission case 5 and the continuously variable transmission 7. The left and right body frames 9 are connected to the front transmission case 5 and arranged in the front-rear direction. The left and right front wheels 1 are supported by the body frame 9. The left and right rear wheels 2 are supported by the rear transmission case 6.

The engine 10 is connected to a front portion of the front transmission case 5 and upper portions of the body frames 9. The engine 10 is covered by a bonnet 11. Power from the engine 10 is transmitted to a transmission shaft (not shown) and a transmission gear (not shown) inside the front transmission case 5. A transmission shaft (not shown) is connected across the front transmission case 5 and the continuously variable transmission 7, and power from the engine 10 is transmitted from the front transmission case 5 to the continuously variable transmission 7 via the transmission shaft.

The front transmission case 5 has a PTO shaft 17 and changes the speed of the power transmitted from the engine 10. The PTO shaft 17 extends from the front transmission case 5 to a rear end portion of the body 3. The power having undergone speed change by the front transmission case 5 is distributed to the continuously variable transmission 7 and the PTO shaft 17.

The continuously variable transmission 7 is configured to continuously change speed in both forward and reverse directions. Power from the continuously variable transmission 7 is transmitted to the left and right rear wheels 2 via a sub-transmission device (not shown) and a rear wheel differential device (not shown) inside the rear transmission case 6. The power branched off immediately before the rear wheel differential device is transmitted, via a transmission shaft (not shown) connected across the rear transmission case 6 and the front transmission case 5, to a front-wheel transmission shaft (not shown) in the front transmission case 5 and to a front wheel differential device (not shown), and is further transmitted to the left and right front wheels 1.

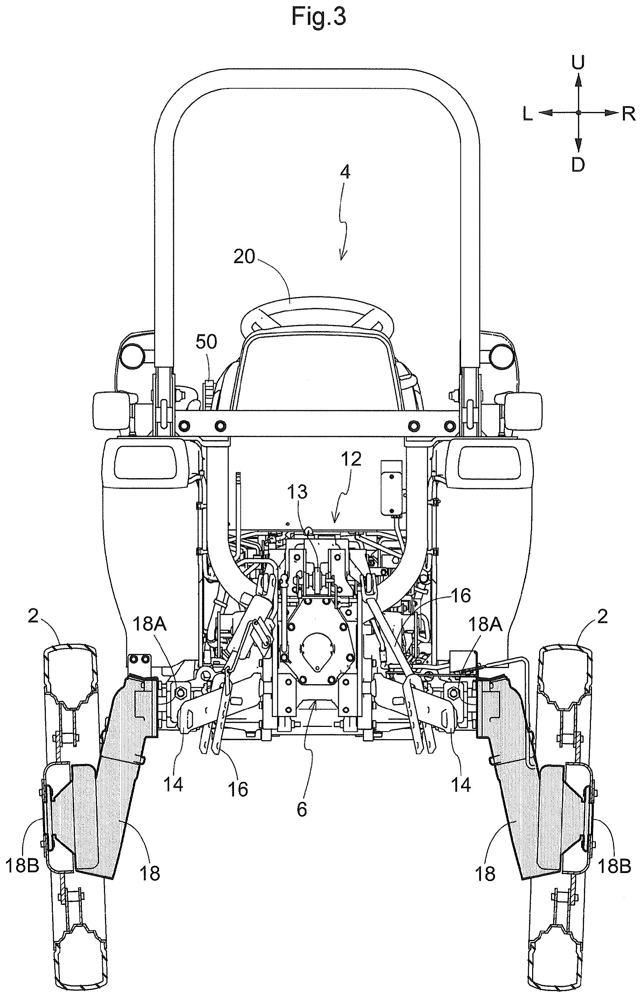

Left and right rear transmission cases 18 are respectively provided on the left and right sides of the rear transmission case 6. In the rear view in FIG. 3, the left and right rear transmission cases 18 are shown enclosed by bold lines and shaded in gray. That is to say, the rear view in FIG. 3 clearly shows the left and right rear transmission cases 18. Rear travel output units 6A that output power to the left and right rear wheels 2 are respectively provided on left and right side portions of the rear transmission case 6. Respective lateral inner end portions 18A of the left and right rear transmission cases 18 are connected to the rear travel output units 6A of the rear transmission case 6. Lateral outer side portions, with respect to the body, of the left and right rear transmission cases 18 extend downward, and lateral outer end portions 18B of the rear transmission cases 18 are connected to the rear wheels 2. Thus, the left and right rear transmission cases 18 transmit the power output from the rear transmission case 6 to the left and right rear wheels 2, respectively. The power output from the rear transmission case 6 is transmitted from the rear travel output units 6A to the rear wheels 2 via transmission shafts (not shown) inside the rear transmission cases 18. As a result, the left and right rear wheels 2 rotate. The rear transmission cases 18 are configured such that their respective upper connection portions connected to the rear travel output units 6A are positioned higher than their respective lower connection portions connected to the rear wheels 2.

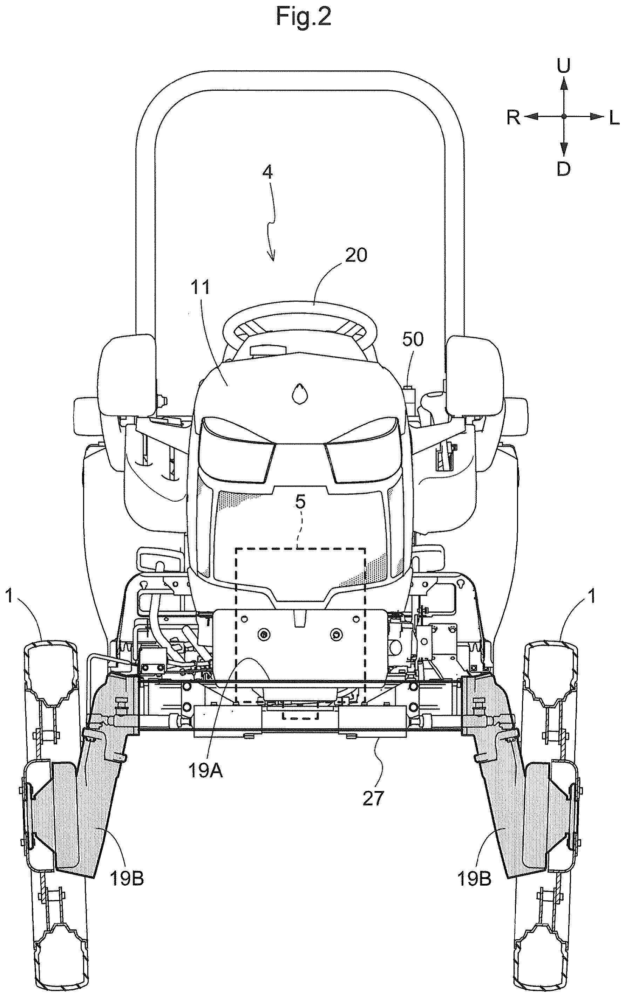

A first front transmission case 19A is provided forward of the front transmission case 5, and the first front transmission case 19A extends in the lateral direction with respect to the body. In addition, left and right second front transmission cases 19B are respectively provided on the left and right sides of the first front transmission case 19A. In the front view in FIG. 2, the first front transmission case 19A is clearly shown with a thick line, with other members located forward of the first front transmission case 19A rendered transparent. In addition, in the front view in FIG. 2, the left and right second front transmission cases 19B are shown enclosed by bold lines and shaded in gray.

Lateral inner end portions, with respect to the body, of the left and right second front transmission cases 19B are connected to the lateral outer end portions, with respect to the body, of the first front transmission case 19A. Lateral outer side portions, with respect to the body, of the left and right second front transmission cases 19B extend downward, and the lateral outer end portions, with respect to the body, of the second front transmission cases 19B are connected to the front wheels 1. The power for front wheel drive from the front transmission case 5 is transmitted to the front wheels 1 via a front wheel differential device (not shown) and a transmission shaft (not shown) inside the first front transmission case 19A, and transmission gears (not shown) inside the second front transmission cases 19B. As a result, the left and right front wheels 1 rotate. The second front transmission cases 19B are configured such that their respective portions connected to the lateral outer end portions, with respect to the body, of the first front transmission case 19A are positioned higher than their respective portions connected to the front wheels 1.

As described above, the tractor shown in this embodiment is a tractor with a so-called "high clearance" configuration. As shown in FIGS. 2 and 3, the left and right rear transmission cases 18 extend downward from the left and right side portions of the rear transmission case 6, and the second front transmission cases 19B extend downward from the left and right end portions of the first front transmission case 19A. That is to say, the travel device according to the present invention is formed in a substantially gate-like shape in the front view and rear view of the body. Therefore, there is a space under the body 3 where growing crops can remain standing as they are. In addition, the left and right front wheels 1 swing about the vertical axis of the first front transmission case 19A, and the left and right rear wheels 2 swing about the vertical axes of the rear transmission cases 18. The tractor according to this embodiment is capable of four-wheel steering. The tractor according to this embodiment is particularly suitable for, for example, inter-row cultivation work in agricultural fields.

As shown in FIGS. 1 to 3, a switching operation tool 50 that receives manual operations is provided on a side portion of the driving section 4.

At a rear end portion of the body 3 (the rear lower portion of the rear transmission case 6), a three-point link mechanism 12 is connected to be able to swing up and down, and the three-point link mechanism 12 raises and lowers the work device. Examples of work devices to be mounted on the tractor may include a cultivator, a disc harrow, a power harrow, an inter-row cultivation and weeding management machine, a seeding device, a planter, a fertilizing device, a leaf-cutting device, a topping device, a spraying device, a ridging device, a mulcher, a rotary rake, a tedder, and a mowing device.

The three-point link mechanism 12 includes a single top link 13, left and right lower links 14, and left and right lift arms 15 that are operated to swing up and down. The lower links 14 are connected to a rear end portion of the body 3 to be able to swing up and down. A linkage rod 16 is connected across the right lift arm 15 and the right lower link 14. The left and right lower links 14 swing up and down in response to the left and right lift arms 15 being operated to swing up and down, thereby causing the work device to be raised and lowered.

The PTO shaft 17 is provided at a rear end portion of the body 3. The PTO shaft 17 transmits the rotational force from the engine 10 to the work device via a universal joint (not shown). The PTO shaft 17 is provided at a position higher than the lowermost position of the lower links 14, and outputs rotational power.

### Description of the Four-Wheel Steering Mechanism

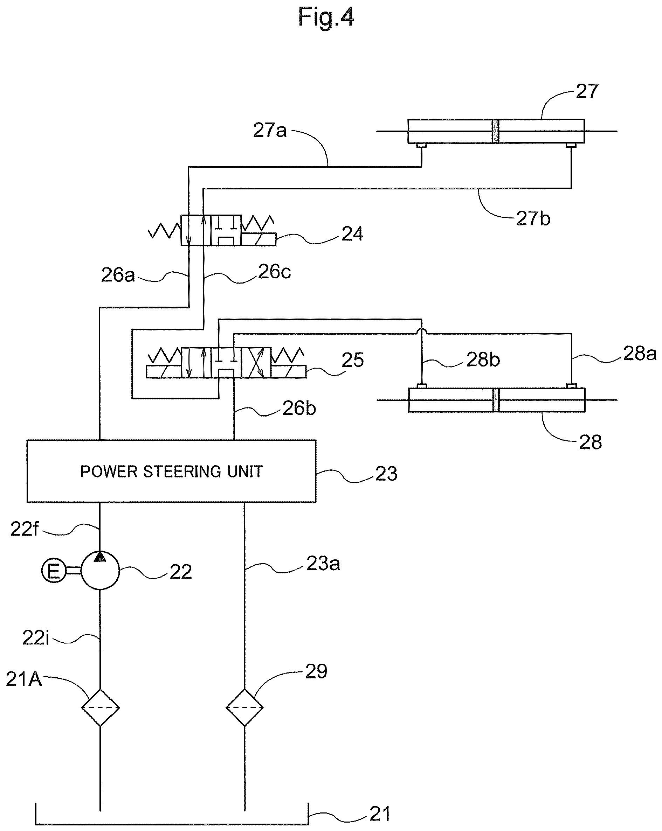

A hydraulic circuit for a steering mechanism according to this embodiment will be described with reference to FIG. 4. This hydraulic circuit is a schematic circuit of hydraulic oil used for steering operations of the front wheels 1 and the rear wheels 2 shown in FIGS. 1 to 3.

The hydraulic oil is stored in a hydraulic oil storage unit 21. A hydraulic oil pump 22 is configured to be capable of drawing hydraulic oil from the hydraulic oil storage unit 21. When the suction force of the hydraulic oil pump 22 acts on this hydraulic oil, impurities contained in the hydraulic oil are removed by an oil filter 21A. Thereafter, the hydraulic oil is drawn into the hydraulic oil pump 22 through a suction oil passage 22i, and discharged to a power steering unit 23 through a discharge oil passage 22f.

The discharge oil passage 22f and a return oil passage 23a are connected to the power steering unit 23. The discharge oil passage 22f is directly connected to the discharge port of the hydraulic oil pump 22, and therefore, when the hydraulic oil pump 22 is operating, the pressure of the hydraulic oil in the discharge oil passage 22f is higher than the pressure of the hydraulic oil in the return oil passage 23a. Accordingly, the discharge oil passage 22f is the inlet oil passage, and the return oil passage 23a is the return oil passage.

Based on the operation amount of the steering wheel 20, the hydraulic oil is supplied from the power steering unit 23 to each of a front wheel steering actuator 27 and a rear wheel steering actuator 28. A front wheel steering valve 24 and a rear wheel steering valve 25 are connected to the power steering unit 23.

A first intermediate oil passage 26a is connected to each of the power steering unit 23 and the front wheel steering valve 24. A second intermediate oil passage 26b is connected to each of the power steering unit 23 and the rear wheel steering valve 25. Furthermore, a third intermediate oil passage 26c is connected to each of the front wheel steering valve 24 and the rear wheel steering valve 25. That is to say, when one or both of the front wheels 1 and the rear wheels 2 are steered, the flow of hydraulic oil passes through the first intermediate oil passage 26a, the third intermediate oil passage 26c, and the second intermediate oil passage 26b in that order, or passes through the second intermediate oil passage 26b, the third intermediate oil passage 26c, and the first intermediate oil passage 26a in that order.

A first front wheel oil passage 27a and a second front wheel oil passage 27b are connected to the front wheel steering valve 24. The first front wheel oil passage 27a is connected to one end of the front wheel steering actuator 27, and the second front wheel oil passage 27b is connected to the other end of the front wheel steering actuator 27.

The front wheel steering valve 24 is, for example, a solenoid valve. The front wheel steering valve 24 is configured to be switchable between a connection state in which the first front wheel oil passage 27a and the first intermediate oil passage 26a are in communication and the second front wheel oil passage 27b and the third intermediate oil passage 26c are in communication, and a shut-off state in which the first front wheel oil passage 27a and the first intermediate oil passage 26a are shut off from each other and the second front wheel oil passage 27b and the third intermediate oil passage 26c are shut off from each other. When the front wheel steering valve 24 is in the shut-off state, the first intermediate oil passage 26a and the third intermediate oil passage 26c are in communication.

When the front wheel steering valve 24 is in the connection state, the rod of the front wheel steering actuator 27 can slide in the left-right direction under the pressure of the hydraulic oil. As a result, the front wheels 1 are steerable in the left-right direction. When the front wheel steering valve 24 is in the shut-off state, the rod of the front wheel steering actuator 27 cannot slide. As a result, the front wheels 1 are non-steerable.

When the front wheels 1 are steered to one side in the left-right direction, one of the first front wheel oil passage 27a and the second front wheel oil passage 27b becomes the supply oil passage, and the other of the first front wheel oil passage 27a and the second front wheel oil passage 27b becomes the return oil passage. Then, the rod of the front wheel steering actuator 27 slides to one side in the left-right direction (the side where the return oil passage is located), and the orientation of the front wheels 1 changes.

A first rear wheel oil passage 28a and a second rear wheel oil passage 28b are connected to the rear wheel steering valve 25. The first rear wheel oil passage 28a is connected to one end of the rear wheel steering actuator 28, and the second rear wheel oil passage 28b is connected to the other end of the rear wheel steering actuator 28.

The rear wheel steering valve 25 is, for example, a solenoid valve. The rear wheel steering valve 25 is configured to be switchable between a straight-connection state, which will be described below, a cross-connection state, which will be described below, and a shut-off state, which will be described below. The straight-connection state of the rear wheel steering valve 25 is a state in which the first rear wheel oil passage 28a and the second intermediate oil passage 26b are in communication and the second rear wheel oil passage 28b and the third intermediate oil passage 26c are in communication. The cross-connection state of the rear wheel steering valve 25 is a state in which the first rear wheel oil passage 28a and the third intermediate oil passage 26c are in communication and the second rear wheel oil passage 28b and the second intermediate oil passage 26b are in communication. The shut-off state of the rear wheel steering valve 25 is a state in which the first rear wheel oil passage 28a is shut-off from both the second intermediate oil passage 26b and the third intermediate oil passage 26c, and the second rear wheel oil passage 28b is shut off from both the second intermediate oil passage 26b and the third intermediate oil passage 26c. When the rear wheel steering valve 25 is in the shut-off state, the second intermediate oil passage 26b and the third intermediate oil passage 26c are in communication.

When the rear wheel steering valve 25 is in the connection state, the rod of the rear wheel steering actuator 28 can slide in the left-right direction under the pressure of the hydraulic oil. As a result, the rear wheels 2 are steerable in the left-right direction. When the rear wheel steering valve 25 is in the shut-off state, the rod of the rear wheel steering actuator 28 cannot slide. As a result, the rear wheels 2 are non-steerable.

When the rear wheels 2 are steered to one side in the left-right direction, one of the first rear wheel oil passage 28a and the second rear wheel oil passage 28b becomes the supply oil passage, and the other of the first rear wheel oil passage 28a and the second rear wheel oil passage 28b becomes the return oil passage. Then, the rod of the rear wheel steering actuator 28 slides to one side in the left-right direction (the side where the return oil passage is located), and the orientation of the rear wheels 2 changes.

Thus, the power steering unit 23 is configured to be able to supply hydraulic oil to each of the left and right cylinder chambers in the front wheel steering actuator 27 via the first front wheel oil passage 27a and the second front wheel oil passage 27b. Similarly, the power steering unit 23 is configured to be able to supply hydraulic oil to each of the left and right cylinder chambers in the rear wheel steering actuator 28 via the first rear wheel oil passage 28a and the second rear wheel oil passage 28b.

By the switching operation of the spool (not shown) in the power steering unit 23 and the spool in the front wheel steering valve 24, the first front wheel oil passage 27a is brought into communication with one of the discharge oil passage 22f and the return oil passage 23a, and the second front wheel oil passage 27b is brought into communication with the other of the discharge oil passage 22f and the return oil passage 23a.

By the switching operation of the spool (not shown) in the power steering unit 23 and the spool in the rear wheel steering valve 25, the first rear wheel oil passage 28a is brought into communication with one of the discharge oil passage 22f and the return oil passage 23a, and the second rear wheel oil passage 28b is brought into communication with the other of the discharge oil passage 22f and the return oil passage 23a.

When the second front wheel oil passage 27b and the return oil passage 23a are brought into communication, the first front wheel oil passage 27a and the discharge oil passage 22f are brought into communication. In this case, hydraulic oil is supplied to the left cylinder chamber in the front wheel steering actuator 27, and the piston rod slides to the right side with respect to the body. When the second front wheel oil passage 27b and the discharge oil passage 22f are brought into communication, the first front wheel oil passage 27a and the return oil passage 23a are brought into communication. In this case, hydraulic oil is supplied to the right cylinder chamber in the front wheel steering actuator 27, and the piston rod slides to the left side with respect to the body.

When the second rear wheel oil passage 28b and the return oil passage 23a are brought into communication, the first rear wheel oil passage 28a and the discharge oil passage 22f are brought into communication. In this case, hydraulic oil is supplied to the left cylinder chamber in the rear wheel steering actuator 28, and the piston rod slides to the right side with respect to the body. When the second rear wheel oil passage 28b and the discharge oil passage 22f are brought into communication, the first rear wheel oil passage 28a and the return oil passage 23a are brought into communication. In this case, hydraulic oil is supplied to the right cylinder chamber in the rear wheel steering actuator 28, and the piston rod slides to the left side with respect to the body.

Each of the front wheels 1 and the rear wheels 2 is configured to be swingable about a vertical axis in response to the piston rods in these cylinders sliding in the left-right direction.

The hydraulic oil discharged from the power steering unit 23 to the return oil passage 23a is filtered by an oil filter 29 to remove impurities, and is returned to the hydraulic oil storage unit 21.

### Control System

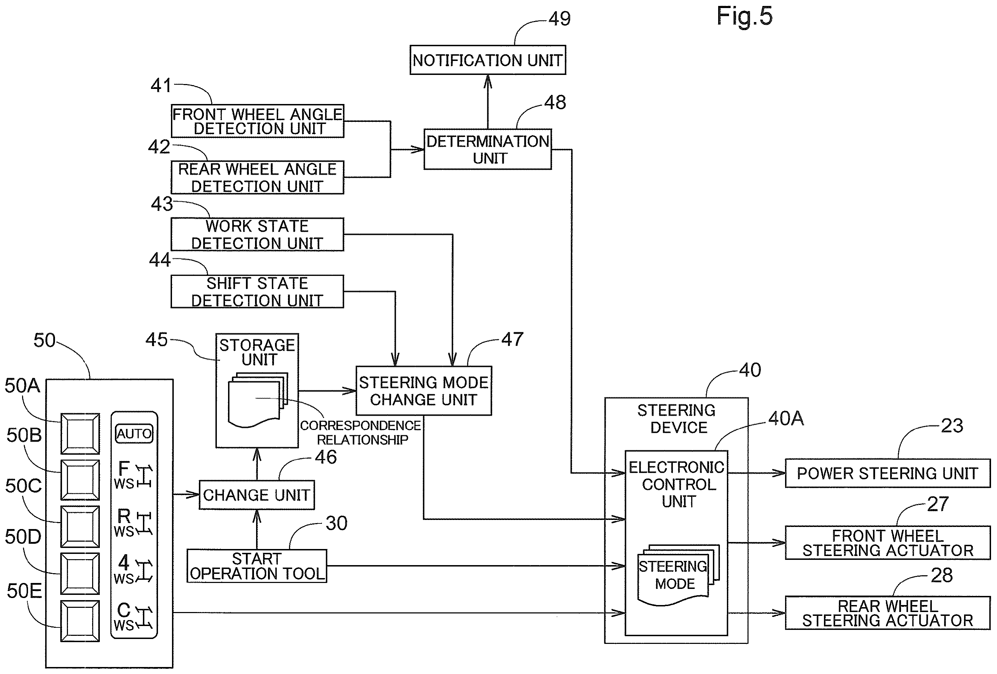

A control system for the work vehicle according to this embodiment will be described with reference to FIG. 5. This control system includes a steering device 40, a front wheel angle detection unit 41, a rear wheel angle detection unit 42, a work state detection unit 43, a shift state detection unit 44, a storage unit 45, a change unit 46, a steering mode change unit 47, a determination unit 48, and a notification unit 49. The steering device 40 is equivalent to the "steering control device" recited in the claims. The front wheel angle detection unit 41 and the rear wheel angle detection unit 42 are equivalent to the "detection unit" recited in the claims.

The steering device 40 controls each of the power steering unit 23, the front wheel steering valve 24, and the rear wheel steering valve 25 based on the operation amount of the steering wheel 20 and the steering mode selected by the operator using the switching operation tool 50. Thus, the steering device 40 can steer each of the front wheels 1 and the rear wheels 2.

The steering device 40 includes an electronic control unit 40A. The electronic control unit 40A can be configured from a microprocessor, a DSP (digital signal processor), software, a logic circuit, and the like. This electronic control unit 40A manages a plurality of steering modes. That is to say, the steering device 40 is capable of performing steering control on each of the front wheels 1 and the rear wheels 2 and has a plurality of steering modes in each of which steering control is performed in a different manner. Note that the steering device 40 may include the power steering unit 23, the front wheel steering valve 24, and the rear wheel steering valve 25.

The plurality of steering modes include an FWS mode (front wheel steering mode), an RWS mode (rear wheel steering mode), a 4WS mode (four-wheel steering mode), a CWS mode (crab steering mode), and an orientation correction mode. The steering device 40 is configured to switch between these steering modes. The steering device 40 is configured to be switchable, according to each steering mode, whether or not to steer the front wheels 1, whether or not to steer the rear wheels 2, and, when the rear wheels 2 are to be steered, which direction, i.e., left or right, the rear wheels 2 are to be steered relative to the turning direction of the steering wheel 20.

Hereinafter, the FWS mode, the RWS mode, the 4WS mode, and the CWS mode will be described. The orientation correction mode will be described later.

The switching operation tool 50 is provided with an auto button 50A, an FWS button 50B, an RWS button 50C, a 4WS button 50D, and a CWS button 50E. The switching operation tool 50 is configured to receive operations to switch the steering mode of the steering device 40 to each of the FWS mode, RWS mode, 4WS mode, and CWS mode. The auto button 50A will be described later.

The FWS mode is a steering mode in which only the front wheels 1 are steered. In other words, the FWS mode is a steering mode in which the front wheels 1 are set to a steerable state and the rear wheels 2 are set to a non-steerable state. When the operator presses the FWS button 50B, the steering mode of the steering device 40 is switched to the FWS mode. When the steering mode of the steering device 40 is the FWS mode, the electronic control unit 40A switches the front wheel steering valve 24 to the connection state and switches the rear wheel steering valve 25 to the shut-off state. That is to say, the steering device 40 can perform steering control on the front wheels 1 and sets the rear wheels 2 to the non-steerable state. As a result, front wheel steering of the tractor is realized.

The RWS mode is a steering mode in which only the rear wheels 2 are steered. In other words, the RWS mode is a steering mode in which the front wheels 1 are set to a non-steerable state and the rear wheels 2 are set to a steerable state. When the operator presses the RWS button 50C, the steering mode of the steering device 40 is switched to the RWS mode. When the steering mode of the steering device 40 is the RWS mode, the electronic control unit 40A switches the front wheel steering valve 24 to the shut-off state and switches the rear wheel steering valve 25 to the cross-connection state. That is to say, the steering device 40 can perform steering control on the rear wheels 2 and sets the front wheels 1 to the non-steerable state. As a result, rear wheel steering of the tractor is realized.

The 4WS mode is a steering mode in which the front wheels 1 and the rear wheels 2 are set to a steerable state. When the operator presses the 4WS button 50D, the steering mode of the steering device 40 is switched to the 4WS mode. When the steering mode of the steering device 40 is the 4WS mode, the electronic control unit 40A switches the front wheel steering valve 24 to the connection state and switches the rear wheel steering valve 25 to the cross-connection state. That is to say, the steering device 40 can perform steering control on the front wheels 1 and the rear wheels 2. As a result, four-wheel steering of the tractor is realized.

The CWS mode is a steering mode in which the front wheels 1 and the rear wheels 2 are set to a steerable state and a steering mode in which the rear wheels 2 are steered in the opposite direction to that in the 4WS mode. In other words, the CWS mode is a steering mode in which the front wheels 1 and the rear wheels 2 are steered in the same direction. When the operator presses the CWS button 50E, the steering mode of the steering device 40 is switched to the CWS mode. When the steering mode of the steering device 40 is the CWS mode, the electronic control unit 40A switches the front wheel steering valve 24 to the connection state and switches the rear wheel steering valve 25 to the straight-connection state. That is to say, the steering device 40 can perform steering control on the front wheels 1 and the rear wheels 2. As a result, crab steering of the tractor is realized.

As described above, the steering device 40 is capable of switching between a plurality of steering modes, and steers at least one of the front wheels 1 and the rear wheels 2 in response to a steering operation received by the steering wheel 20. Specifically, the steering device 40 performs mode changes by switching the states of the front wheel steering valve 24 and the rear wheel steering valve 25. The power steering unit 23 supplies hydraulic oil to the first intermediate oil passage 26a or the second intermediate oil passage 26b, thereby steering the front wheels 1 and the rear wheels 2.

Note that the electronic control unit 40A may be configured to switch the rear wheel steering valve 25 to the straight-connection state when the steering mode of the steering device 40 is the RWS mode or the 4WS mode. In addition, the electronic control unit 40A may be configured to switch the rear wheel steering valve 25 to the cross-connection state when the steering mode of the steering device 40 is the CWS mode. This configuration can be appropriately changed depending on whether the rear wheel steering actuator 28 is arranged on the front side with respect to the rear transmission cases 18 or on the rear side with respect to the rear transmission cases 18.

The front wheel angle detection unit 41 detects the orientation of the front wheels 1 in the left-right direction with reference to the neutral orientation of the front wheels 1. The neutral orientation of the front wheels 1 is the orientation in which the body 3 travels straight or substantially straight.

The rear wheel angle detection unit 42 detects the orientation of the rear wheels 2 in the left-right direction with reference to the neutral orientation of the rear wheels 2. The neutral orientation of the rear wheels 2 is the orientation in which the body 3 travels straight or substantially straight.

The work state detection unit 43 detects whether or not the work device is performing work on the agricultural field.
The work state detection unit 43 may be a sensor connected to the work device, a sensor that detects the rotation of the PTO shaft 17, or a sensor that detects the raising and lowering of the three-point link mechanism 12.

The shift state detection unit 44 is configured to be able to detect the shift state of the continuously variable transmission 7. The shift state of the continuously variable transmission 7 includes a forward state in which the body 3 moves forward, a reverse state in which the body 3 moves backward, and a neutral state in which the power of the engine 10 is not transmitted to either the front wheels 1 or the rear wheels 2. Therefore, the shift state detection unit 44 can detect whether the body 3 is moving forward, moving backward, or stopped. Note that the shift state detection unit 44 may be configured to detect the state of a main transmission lever provided in the driving section 4, for example.

Alternatively, the shift state detection unit 44 may be configured to be able to detect the shift state of a sub-transmission (not shown) inside the rear transmission case 6. The shift states of the sub-transmission include: a low-speed state in which the vehicle body 3 moves forward at a low speed while performing work with the work device; a high-speed state in which the vehicle body 3 moves forward at a high speed without performing work with the work device; a neutral state in which the power of the engine 10 is not transmitted to either the front wheels 1 or the rear wheels 2; and a reverse state in which the vehicle body 3 moves backward. Even with this configuration, the shift state detection unit 44 can detect whether the body 3 is moving forward, moving backward, or stopped.
Note that the shift state detection unit 44 may be configured to detect the state of a sub-transmission lever provided in the driving section 4, for example.

The storage unit 45, the change unit 46, and the steering mode change unit 47 will be described later together with the automatic steering mode change function based on the auto button 50A.

The determination unit 48 acquires information regarding the orientations of the front wheels 1 and the rear wheels 2 from the front wheel angle detection unit 41 and the rear wheel angle detection unit 42. The determination unit 48 determines that a neutral deviation state has occurred when the orientation of the front wheels 1 or the rear wheels 2 set to the non-steerable state deviates from the neutral orientation by an amount greater than or equal to a predetermined threshold value. Although details will be described later, when the determination unit 48 determines that a neutral deviation state has occurred, the determination unit 48 transmits a notification signal to the electronic control unit 40A. The neutral deviation state is a state in which the orientation of one of the front wheels 1 and the rear wheels 2 set to the non-steerable state deviates from the neutral orientation by an amount greater than or equal to a predetermined threshold value.

The notification unit 49 issues a notification in response to the determination unit 48 determining that the neutral deviation state has occurred. In other words, the notification unit 49 issues a notification in response to the occurrence of a neutral deviation state, in which the orientation of one of the front wheels 1 and the rear wheels 2 set to the non-steerable state deviates from the neutral orientation by an amount greater than or equal to a predetermined threshold value, based on detection results from the front wheel angle detection unit 41 and the rear wheel angle detection unit 42.

### Automatic Steering Mode Change Function Based on Auto Button

The electronic control unit 40A is configured to, when the operator presses the auto button 50A, receive a mode change signal from the steering mode change unit 47 and change the steering mode.

The storage unit 45 (an example of memory) is a device that stores data and is constituted by a storage device such as an EEPROM or a non-volatile RAM (flash memory, FeRAM, or the like.).
The storage unit 45 stores correspondence relationships between the body states and the steering modes to be used in correspondence with the body states.

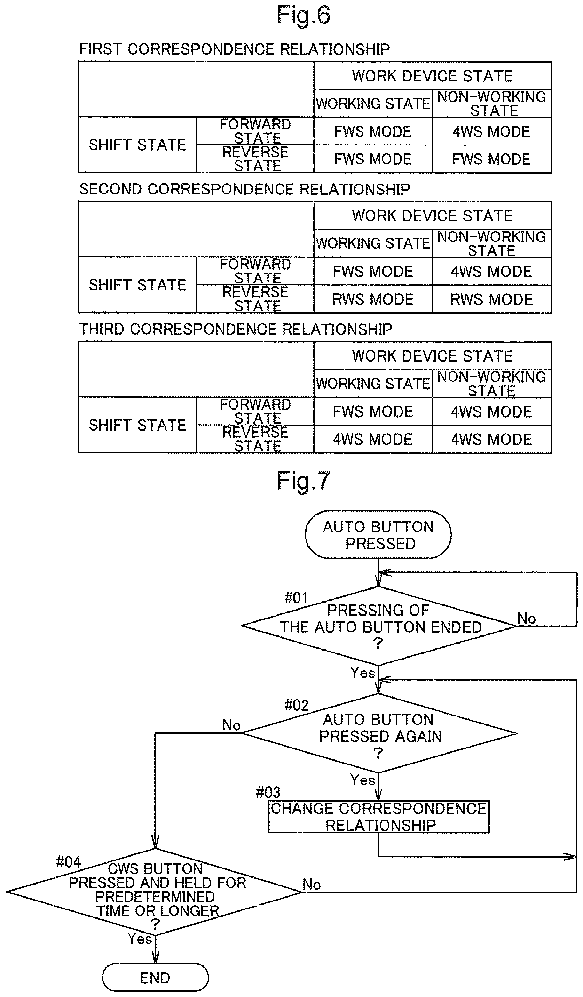

Examples of correspondence relationships between the body states and the steering modes are shown in FIG. 6. FIG. 6 shows shift states and work device states as body states. The shift states are detection results from the shift state detection unit 44 and include a forward state, a neutral state, and a reverse state. That is to say, the body states include a forward state in which the body 3 can travel forward and a reverse state in which the body 3 can travel backward. The work device states are detection results from the work state detection unit 43 and include a working state and a non-working state. That is to say, the body states include a working state in which the work device is performing work and a non-working state in which the work device is not performing work. FIG. 6 shows a first correspondence relationship, a second correspondence relationship, and a third correspondence relationship. These correspondence relationships are stored in the storage unit 45.

In each of the first correspondence relationship, the second correspondence relationship, and the third correspondence relationship, when the shift state is the forward state and the work device state is the working state, the steering mode of the steering device 40 is the FWS mode. In each of the first correspondence relationship, the second correspondence relationship, and the third correspondence relationship, when the shift state is the forward state and the work device state is the non-working state, the steering mode of the steering device 40 is the 4WS mode. In the first correspondence relationship, when the shift state is the reverse state, the steering mode of the steering device 40 is the FWS mode regardless of the work device state. In the second correspondence relationship, when the shift state is the reverse state, the steering mode of the steering device 40 is the RWS mode regardless of the work device state. In the third correspondence relationship, when the shift state is the reverse state, the steering mode of the steering device 40 is the 4WS mode regardless of the work device state. When the operator presses the auto button 50A, the steering mode of the steering device 40 is changed based on the correspondence relationship selected and set among these three correspondence relationships. Although details will be described later, this embodiment employs a configuration in which the correspondence relationship used for the automatic steering mode change function that is based on the auto button 50A can be changed.

The steering mode change unit 47 acquires the body state based on a detection result from the work state detection unit 43 and a detection result from the shift state detection unit 44. Thereafter, the steering mode change unit 47 reads out the steering mode corresponding to the body state from the storage unit 45 and causes the steering device 40 to change the steering mode. That is to say, the steering mode change unit 47 changes the steering mode of the steering device 40 to the steering mode corresponding to the acquired body state based on the correspondence relationship between the body states and the steering modes to be used in correspondence with the body states.

Although details will be described later, the change unit 46 changes between the correspondence relationships stored in the storage unit 45 based on the manual operation received by the switching operation tool 50. That is to say, the change unit 46 can change from one correspondence relationship between the body states and the corresponding steering modes to be used to another.

### Function to Change Steering Mode Corresponding to Body State

As described above, when the operator presses the auto button 50A, the steering device 40 changes the steering mode in accordance with the body state. The correspondence relationships between the body states and the steering modes are stored in the storage unit 45. In this embodiment, the change unit 46 is configured to be able to change between the correspondence relationships between the body states and the steering modes stored in the storage unit 45 (FIG. 6).

The function to change from one correspondence relationship between the body states and the steering modes to another will be described with reference to FIG. 7. Although not described in detail, the tractor is provided with a start operation tool 30 that receives a manual operation to start the engine 10. First, when the engine 10 is stopped and the operator performs the start operation of the engine 10 with the start operation tool 30 while pressing the auto button 50A, the flowchart in FIG. 7 starts. That is to say, a configuration is employed in which the change unit 46 can change the correspondence relationship in response to both the start operation tool 30 of the engine 10 and the switching operation tool 50 being operated. Alternatively, it is possible to employ a configuration in which the flowchart in FIG. 7 starts even when the engine 10 is stopped if the operator operates the start operation tool 30 while pressing the auto button 50A to turn on the power of the electronic control unit 40A.

First, after the engine 10 starts, the change unit 46 determines whether or not the pressing of the auto button 50A has ended (step #01). That is to say, it is determined in step #01 whether or not the operator has released the auto button 50A after starting the engine 10 by performing the start operation of the engine 10 while pressing the auto button 50A. While the auto button 50A remains pressed (step #01: No), the change unit 46 repeats the determination in step #01.

When the auto button 50A is released (step #01: Yes), the change unit 46 determines whether or not the auto button 50A has been pressed again (step #02). The determination as to whether or not the auto button 50A has been pressed in step #02 is performed using an edge-sensitive method. The change unit 46 detects the rising edge when the auto button 50A is pressed. Accordingly, when the auto button 50A starts to be pressed, the determination in step #02 results in "Yes". Note that it is possible to employ a configuration in which the determination in step #02 results in "No" when the auto button 50A is pressed and held.

When the auto button 50A is pressed (step #02: Yes), the correspondence relationship between the body states and the corresponding steering modes to be used is changed (step #03). Therefore, in this embodiment, the change unit 46 changes the correspondence relationship between the body states and the steering modes to be used in sequence-from the first correspondence relationship to the second, and then to the third-each time the operator presses the auto button 50A based on step #02. When the auto button 50A is pressed while the third correspondence relationship is selected, the change unit 46 sets the correspondence relationship back to the first correspondence relationship. That is to say, each time the auto button 50A is pressed, the processing in steps #02 and #03 is repeated in a loop, and the correspondence relationship is changed in a cyclical manner in the order of the first correspondence relationship, the second correspondence relationship, and the third correspondence relationship.

Thus, the switching operation tool 50 receives the manual operation to cause the change unit 46 to change between the correspondence relationships. The auto button 50A is used to change the correspondence relationship between the steering modes and the corresponding body states to be used.

When the auto button 50A is not pressed (step #02: No), the change unit 46 determines whether or not the CWS button 50E has been pressed and held for a predetermined time or longer (step #04). The predetermined time can be changed as appropriate, for example, within the range of 1 to 5 seconds. When the CWS button 50E has not been pressed and held for the predetermined time or longer (step #04: No), processing returns to step #02. When the CWS button 50E has been held down for the set time or longer (step #04: Yes), the flowchart in FIG. 7 ends.

Thus, the CWS button 50E is used to confirm the change of the correspondence relationship.

### Function of Orientation Correction Mode

When the front wheel steering valve 24 is in the shut-off state, the rod of the front wheel steering actuator 27 is unable to slide, and the front wheels 1 are in the non-steerable state. When the rear wheel steering valve 25 is in the shut-off state, the rod of the rear wheel steering actuator 28 is unable to slide, and the rear wheels 2 are in the non-steerable state. However, for example, even if the rear wheels 2 are set to the non-steerable state, there is a possibility that "neutral deviation" may occur, in which the rear wheels 2 deviate to the left or right from the neutral orientation due to the rear wheels 2 receiving impacts from uneven surfaces of the agricultural field or due to leakage of hydraulic oil from the rear wheel steering actuator 28.

The orientation correction mode is a steering mode for changing the orientation of the front wheels 1 or the rear wheels 2 set to the non-steerable state to the neutral orientation.

The orientation of the front wheels 1 is detected by the front wheel angle detection unit 41, and the orientation of the rear wheels 2 is detected by the rear wheel angle detection unit 42. The determination unit 48 acquires the orientation of the front wheels 1 or the rear wheels 2 set to the non-steerable state from the front wheel angle detection unit 41 or the rear wheel angle detection unit 42. The determination unit 48 determines that a neutral deviation state has occurred when the acquired orientation deviates from the neutral orientation by an amount greater than or equal to a predetermined threshold value.

The notification unit 49 issues a notification in response to the determination that the neutral deviation state has occurred. In other words, the notification unit 49 issues a notification in response to the occurrence of a neutral deviation state in which the orientation of one of the front wheels 1 and the rear wheels 2 set to the non-steerable state deviates from the neutral orientation by an amount greater than or equal to a predetermined threshold value, based on the detection results from the front wheel angle detection unit 41 and the rear wheel angle detection unit 42.

Each of the auto button 50A, the FWS button 50B, the RWS button 50C, the 4WS button 50D, and the CWS button 50E in the switching operation tool 50 is equipped with a display light, such as an LED. That is to say, the notification unit 49 includes a display light mounted on the switching operation tool 50, and the display light is configured to issue a notification by blinking. The notification unit 49 may also be configured to issue an audio notification, for example by using a buzzer or a speaker.

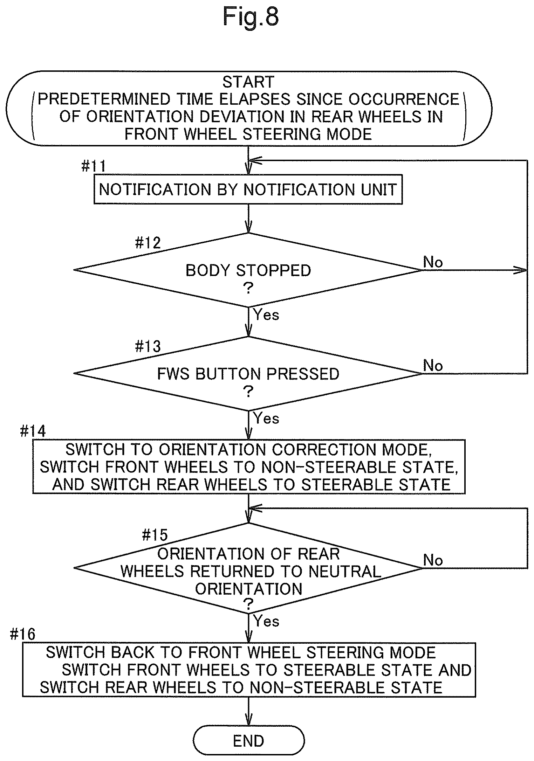

The processing performed in the orientation correction mode when a neutral deviation occurs in the rear wheels 2 will be described with reference to FIG. 8. First, the point in time at which a predetermined time has elapsed since the occurrence of the neutral deviation state serves as the starting point of the flowchart shown in FIG. 8. The notification unit 49 is configured to issue a notification at this point in time. That is to say, the notification unit 49 is configured to issue a notification after a predetermined time has elapsed since the occurrence of a neutral deviation state in one of the front wheels 1 and the rear wheels 2 set to the non-steerable state (step #11). Specifically, the notification unit 49 causes the display light of the FWS button 50B to blink and outputs an audio notification from a buzzer or speaker in the driving section 4.

In step #12, it is determined whether or not the body 3 has stopped. Whether or not the body 3 is stopped is determined based on a detection result from the shift state detection unit 44. That is to say, when the neutral state in which power from the engine 10 is not transmitted to either the front wheels 1 or the rear wheels 2 is detected by the shift state detection unit 44, the electronic control unit 40A determines that the vehicle body 3 is stopped (step #12: Yes). If the body 3 has not stopped (step #12: No), the processing in steps #11 and #12 is repeated. That is to say, the conditions for the steering device 40 to switch the steering mode to the orientation correction mode include the body 3 being in a stopped state.

In step #13, it is determined whether or not the FWS button 50B has been pressed. If the FWS button 50B has not been pressed (step #13: No), the processing in steps #11 to #13 is repeated. That is to say, the FWS button 50B of the switching operation tool 50 receives the operation to switch the steering mode of the steering device 40 to the orientation correction mode.

When the operator presses the FWS button 50B (step #13: Yes), the steering mode of the steering device 40 is switched to the orientation correction mode (step #14). The steering device 40 is configured to be able to switch the steering mode to the orientation correction mode even if the orientation of the front wheels 1 set to the steerable state is not the neutral orientation. The steering device 40 sets the rear wheels 2, which were set to the non-steerable state, to the steerable state and sets the front wheels 1, which were set to the steerable state, to the non-steerable state. Specifically, the electronic control unit 40A switches the front wheel steering valve 24 to the shut-off state and switches the rear wheel steering valve 25 to the cross-connection state (or the straight-connection state). Then, the operator can perform steering control only on the rear wheels 2 by operating the steering wheel 20.

That is to say, in the FWS mode, if the orientation of the rear wheels 2 deviates from the neutral orientation by an amount greater than or equal to a predetermined threshold value and the FWS button 50B of the switching operation tool 50 is operated, the steering device 40 switches the steering mode to the orientation correction mode.

In step #15, it is determined whether or not the orientation of the rear wheels 2 has returned to the neutral orientation. This determination may be made by the determination unit 48 or by the electronic control unit 40A. While the orientation of the rear wheels 2 has not returned to the neutral orientation (step #15: No), the processing in step #15 is repeated.

When the operator steers the rear wheels 2 with the steering wheel 20 and the orientation of the rear wheels 2 returns to the neutral orientation (step #15: Yes), the steering mode of the steering device 40 is switched to the FWS mode (step #16). That is to say, the steering device 40 returns to the FWS mode upon completion of changing the orientation of the rear wheels 2 to the neutral orientation in the orientation correction mode. In other words, the steering device 40 returns from the orientation correction mode to the original steering mode upon completion of changing the orientation of the travel device to the neutral orientation in the orientation correction mode.

When the steering mode of the steering device 40 returns to the FWS mode, the electronic control unit 40A switches the front wheel steering valve 24 to the connection state and switches the rear wheel steering valve 25 to the shut-off state. Thus, the rear wheels 2 are set to the non-steerable state, and the front wheels 1 are set to the steerable state.

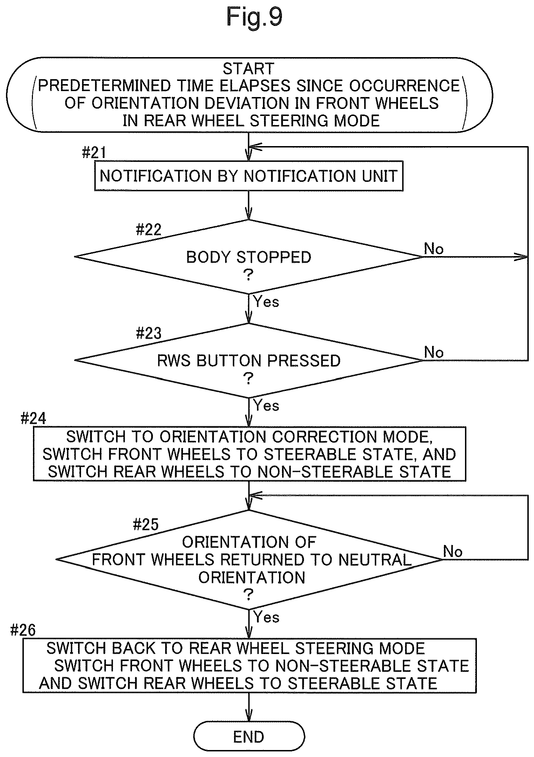

The processing performed in the orientation correction mode when a neutral deviation occurs in the front wheels 1 will be described with reference to FIG. 9. First, the point in time at which a predetermined time has elapsed since the occurrence of the neutral deviation state serves as the starting point of the flowchart shown in FIG. 9. The notification unit 49 is configured to issue a notification at this point in time. That is to say, the notification unit 49 is configured to issue a notification after a predetermined time has elapsed since the occurrence of a neutral deviation state in one of the front wheels 1 and the rear wheels 2 set to the non-steerable state (step #21). Specifically, the notification unit 49 causes the display light of the RWS button 50C to blink and outputs an audio notification from a buzzer or speaker in the driving section 4.

In step #22, it is determined whether or not the body 3 has stopped. Whether or not the body 3 is stopped is determined based on a detection result from the shift state detection unit 44. That is to say, when the neutral state in which power from the engine 10 is not transmitted to either the front wheels 1 or the rear wheels 2 is detected by the shift state detection unit 44, the electronic control unit 40A determines that the vehicle body 3 is stopped (step #22: Yes). If the body 3 has not stopped (step #22: No), the processing in steps #21 and #22 is repeated. That is to say, the conditions for the steering device 40 to switch the steering mode to the orientation correction mode include the body 3 being in a stopped state.

In step #23, it is determined whether or not the RWS button 50C has been pressed. If the RWS button 50C has not been pressed (step #23: No), the processing in steps #21 to #23 is repeated. That is to say, the RWS button 50C of the switching operation tool 50 receives the operation to switch the steering mode of the steering device 40 to the orientation correction mode.

When the operator presses the RWS button 50C (step #23: Yes), the steering mode of the steering device 40 is switched to the orientation correction mode (step #24). The steering device 40 is configured to be able to switch the steering mode to the orientation correction mode even if the orientation of the rear wheels 2 set to the steerable state is not the neutral orientation. The steering device 40 sets the front wheels 1, which were set to the non-steerable state, to the steerable state and sets the rear wheels 2, which were set to the steerable state, to the non-steerable state. Specifically, the electronic control unit 40A switches the rear wheel steering valve 25 to the shut-off state and switches the front wheel steering valve 24 to the connection state. Then, the operator can perform steering control only on the front wheels 1 by operating the steering wheel 20.

That is to say, in the RWS mode, if the orientation of the front wheels 1 deviates from the neutral orientation by an amount greater than or equal to a predetermined threshold value and the RWS button 50C of the switching operation tool 50 is operated, the steering device 40 switches the steering mode to the orientation correction mode.

In step #25, it is determined whether or not the orientation of the front wheels 1 has returned to the neutral orientation. This determination may be made by the determination unit 48 or by the electronic control unit 40A. While the orientation of the front wheels 1 has not returned to the neutral orientation (step #25: No), the processing in step #25 is repeated.

When the operator steers the front wheels 1 with the steering wheel 20 and the orientation of the front wheels 1 returns to the neutral orientation (step #25: Yes), the steering mode of the steering device 40 is switched to the RWS mode (step #26). That is to say, the steering device 40 returns to the RWS mode upon completion changing the orientation of the front wheels 1 to the neutral orientation in the orientation correction mode. In other words, the steering device 40 returns from the orientation correction mode to the original steering mode upon completion of changing the orientation of the travel device to the neutral orientation in the orientation correction mode.

When the steering mode of the steering device 40 returns to the RWS mode, the electronic control unit 40A switches the rear wheel steering valve 25 to the cross-connection state (or the straight-connection state) and switches the front wheel steering valve 24 to the shut-off state. Thus, the front wheels 1 are set to the non-steerable state, and the rear wheels 2 are set to the steerable state.

The notification unit 49 may be configured to change the manner in which a notification is issued according to the degree of deviation from the neutral position of either the front wheels 1 or the rear wheels 2 set to the non-steerable state. For example, as the degree of deviation from the neutral position of the front wheels 1 or the rear wheels 2 increases, the blinking interval of the indicator light of the RWS button 50C or the FWS button 50B may become shorter, or the volume of the buzzer or speaker may become louder. Note that the notification unit 49 may be configured to issue a uniform notification regardless of the degree of deviation from the neutral position of the front wheels 1 or the rear wheels 2 set to the non-steerable state.

The notification unit 49 may be configured to, when a neutral deviation state occurs in the front wheels 1 or the rear wheels 2 that are set to the non-steerable state, indicate the direction to which the steering wheel 20 is to be operated in order to change the orientation of the front wheels 1 or the rear wheels 2, which are deviating from the neutral orientation, to the neutral orientation. For example, it is possible to employ a configuration in which an LCD or OLED display panel is provided on the meter panel in the driving section 4, and the direction to which the steering wheel 20 is to be operated is displayed on the display panel.

### Alternative Embodiments

The present invention is not limited to the configuration illustrated in the above-described embodiment. Alternative representative embodiments of the present invention will be described below by way of example.
(1) The switching operation tool 50 may be a lever type instead of a button type. In this case, it is possible to employ a configuration in which a lever can be switched to positions corresponding to the auto button 50A, the FWS button 50B, the RWS button 50C, the 4WS button 50D, and the CWS button 50E. It is also possible to employ a configuration in which, for example, a dedicated button or the like is provided at the leading end of the lever, which is used to transition to the orientation correction mode when a neutral deviation occurs in the front wheels 1 or the rear wheels 2.
(2) The front wheels 1 are equivalent to the "front travel device" recited in the claims, and the rear wheels 2 are equivalent to the "rear travel device" recited in the claims. The present invention is not limited to this embodiment, and the front travel device may be a crawler, and the rear travel device may be a crawler.
(3) The steering wheel 20 is equivalent to the "steering operation tool" recited in the claims. The present invention is not limited to this embodiment, and the steering operation tool may be, for example, a stick lever.
(4) It is possible to employ a configuration without the above-described power steering unit 23, front wheel steering valve 24, or rear wheel steering valve 25. In this case, a transmission mechanism capable of transmitting the steering operation from the steering wheel 20 to the front wheels 1 and the rear wheels 2 may be provided. The transmission mechanism may include mechanisms such as a clutch, a chain, a belt, and a gear. The transmission mechanism may also be included in the steering control device recited in the claims.
(5) In the embodiment described with reference to FIG. 8, if a neutral deviation state occurs in the rear wheels 2 when the control mode of the steering device 40 is the front wheel steering mode, and if the operator or the like presses the FWS button 50B, the control mode of the steering device 40 is switched to the orientation correction mode. The present invention is not limited to this embodiment, and it is possible to employ a configuration in which, if a neutral deviation state occurs in the rear wheels 2 when the control mode of the steering device 40 is the front wheel steering mode, and if the operator or the like operates a dedicated operation tool other than the FWS button 50B, the control mode of the steering device 40 is switched to the orientation correction mode.
(6) In the embodiment described with reference to FIG. 9, if a neutral deviation state occurs in the front wheels 1 when the control mode of the steering device 40 is the rear wheel steering mode, and if the operator or the like presses the RWS button 50C, the control mode of the steering device 40 is switched to the orientation correction mode. The present invention is not limited to this embodiment, and it is possible to employ a configuration in which, if a neutral deviation state occurs in the front wheels 1 when the control mode of the steering device 40 is the rear wheel steering mode, and if the operator or the like operates a dedicated operation tool other than the RWS button 50C, the control mode of the steering device 40 is switched to the orientation correction mode.
(7) In the embodiment described with reference to FIGS. 8 and 9, the conditions for the steering device 40 to switch the steering mode to the orientation correction mode include that the body 3 is in a stopped state. The present invention is not limited to this embodiment, and it is possible to employ a configuration in which, for example, the steering device 40 switch the steering mode to the orientation correction mode only when the body 3 is moving forward at a very low speed or the body 3 is moving backward at a very low speed. The term "very low speed" means, for example, a speed of 10 centimeters per second or less.
(8) In the embodiment described with reference to FIG. 8, if a neutral deviation state occurs in the rear wheels 2 when the control mode of the steering device 40 is the front wheel steering mode, the notification unit 49 causes the display light of the FWS button 50B to blink. However, the present invention is not limited to this embodiment. In the embodiment described with reference to FIG. 9, if a neutral deviation state occurs in the front wheels 1 when the control mode of the steering device 40 is the rear wheel steering mode, the notification unit 49 causes the display light of the RWS button 50C to blink. However, the present invention is not limited to this embodiment. For example, it is possible to employ a configuration in which an LCD or OLED display panel is provided on the meter panel in the driving section 4, and the notification unit 49 displays the neutral deviation state on the display panel. The manner in which the notification unit 49 displays the neutral deviation state on the display panel may be a graphic display or a message display.
(9) In the embodiment described with reference to FIGS. 8 and 9, the steering device 40 returns from the orientation correction mode to the original steering mode upon completion of changing the orientation of the front wheels 1 or the rear wheels 2 to the neutral orientation in the orientation correction mode. The present invention is not limited to this embodiment, and it is possible to employ a configuration in which the steering device 40 maintains the orientation correction mode as is upon completion of changing the orientation of the front wheels 1 or the rear wheels 2 to the neutral orientation in the orientation correction mode, and then returns to the original steering mode based on a manual operation.
(10) In the embodiment described above, the notification unit 49 is configured to issue a notification after a predetermined time has elapsed since the occurrence of a neutral deviation state in the front wheels 1 or the rear wheels 2. The present invention is not limited to this embodiment, and the notification unit 49 may be configured to issue a notification immediately when a neutral deviation state occurs in the front wheels 1 or the rear wheels 2. In addition, the notification unit 49 may be configured to issue a notification when a neutral deviation state occurs and the body 3 is in a stopped state. Furthermore, the notification unit 49 may be configured to issue a notification when a neutral deviation state occurs and the work device is in a non-working state where no work is being performed.

The configurations disclosed in the above embodiments (including the alternative embodiments, the same applies hereinafter) can be applied in combination with configurations disclosed in other embodiments as long as no contradiction arises. In addition, the embodiments disclosed in this specification are examples and the embodiments of the present invention are not limited thereto. The present invention may be suitably modified within a range that does not depart from the scope and spirit of the present invention.

### Industrial Applicability

The present invention is applicable to a work vehicle. Therefore, the present invention is not limited to the tractor illustrated in the present embodiment, and can be applied to various types of harvesters (such as combines, corn harvesters, sugarcane harvesters, potato harvesters, beet harvesters, carrot harvesters, and the like), rice transplanters, fertilizer management machines, self-propelled spreaders, self-propelled mowers, and the like.

### Description of Reference Signs

1: front wheel (front travel device)
2: rear wheel (rear travel device)
3: body
20: steering wheel (steering operation tool)
40: steering device (steering control device)
41: front wheel angle detection unit (detection unit)
42: rear wheel angle detection unit (detection unit)
49: notification unit
50: switching operation tool

## Claims

1. A work vehicle comprising:
a body;
a front travel device supported by a front portion of the body and configured to be steerable;
a rear travel device supported by a rear portion of the body and configured to be steerable;
a steering control device configured to perform steering control on each of the front travel device and the rear travel device and having a plurality of steering modes in each of which the steering control is performed in a different manner;
a detection unit configured to detect an orientation of the front travel device and an orientation of the rear travel device; and
a notification unit,
wherein the plurality of steering modes include a steering mode in which one of the front travel device and the rear travel device is set to a steerable state and the other of the front travel device and the rear travel device is set to a non-steerable state, and
the notification unit issues a notification based on a detection result from the detection unit, in response to an occurrence of a neutral deviation state in which the orientation of the travel device that is set to the non-steerable state between the front and rear travel devices deviates from a neutral orientation by an amount greater than or equal to a predetermined threshold value.

2. The work vehicle according to claim 1,
wherein the notification unit is configured to issue the notification after a predetermined time has elapsed since the occurrence of the neutral deviation state.

3. The work vehicle according to claim 1,
wherein the notification unit is configured to issue the notification when the neutral deviation state occurs and the body is in a stopped state.

4. The work vehicle according to claim 1,
wherein the body is equipped with a work device configured to perform work on an agricultural field, and
the notification unit is configured to issue the notification when the neutral deviation state occurs and the work device is in a non-working state in which the work device is not performing work.

5. The work vehicle according to any one of claims 1 to 4,
wherein the notification unit is configured to change a manner in which the notification is issued according to the degree of deviation from the neutral position of the travel device that is set to the non-steerable state.

6. The work vehicle according to any one of claims 1 to 5,
wherein the plurality of steering modes include an orientation correction mode for changing the orientation of the travel device that is set to the non-steerable state to the neutral orientation, and
the work vehicle includes a switching operation tool configured to receive an operation performed to switch the steering mode of the steering control device to the orientation correction mode.

7. The work vehicle according to claim 6,
wherein the notification unit includes a display light mounted on the switching operation tool, and
the display light is configured to issue the notification by blinking.

8. The work vehicle according to claim 6 or 7,
wherein the steering control device is configured to switch the steering mode to the orientation correction mode even when the orientation of the travel device that is set to the steerable state is not the neutral orientation.

9. The work vehicle according to any one of claims 6 to 8,
wherein, in the orientation correction mode, the steering control device sets the travel device that has been set to the non-steerable state to the steerable state, and sets the travel device that has been set to the steerable state to the non-steerable state.

10. The work vehicle according to any one of claims 6 to 9,
wherein the steering control device returns from the orientation correction mode to the original steering mode upon completion of changing the orientation of the travel device to the neutral orientation in the orientation correction mode.

11. The work vehicle according to any one of claims 6 to 10,
wherein conditions for the steering control device to switch the steering mode to the orientation correction mode include that the body is in a stopped state.

12. The work vehicle according to claim 6,
wherein the plurality of steering modes include a front wheel steering mode in which the front travel device is set to the steerable state and the rear travel device is set to the non-steerable state,
the switching operation tool is configured to receive an operation performed to switch the steering mode of the steering control device to the front wheel steering mode, and
in the front wheel steering mode, the steering control device switches the steering mode to the orientation correction mode when the orientation of the rear travel device deviates from the neutral orientation by an amount greater than or equal to the predetermined threshold value and the switching operation tool is operated.

13. The work vehicle according to claim 12,
wherein the steering control device returns to the front wheel steering mode upon completion of changing the orientation of the rear travel device to the neutral orientation in the orientation correction mode.

14. The work vehicle according to claim 6,
wherein the plurality of steering modes include a rear wheel steering mode in which the rear travel device is set to the steerable state and the front travel device is set to the non-steerable state,
the switching operation tool is configured to receive an operation performed to switch the steering mode of the steering control device to the rear wheel steering mode, and
in the rear wheel steering mode, the steering control device switches the steering mode to the orientation correction mode when the orientation of the front travel device deviates from the neutral orientation by an amount greater than or equal to the predetermined threshold value and the switching operation tool is operated.

15. The work vehicle according to claim 14,
wherein the steering control device returns to the rear wheel steering mode upon completion of changing the orientation of the front travel device to the neutral orientation in the orientation correction mode.

16. The work vehicle according to any one of claims 1 to 15, further comprising:
a steering operation tool configured to receive a steering operation performed to steer the travel devices, and
the notification unit is configured to, when the neutral deviation state occurs, indicate a direction to which the steering operation tool is to be operated in order to change the orientation of the travel device deviating from the neutral orientation to the neutral orientation.
